# EUROPEAN PATENT APPLICATION

(11) **EP 1 684 053 A1**
(43) Date of publication of application: **26.07.2006**
(21) Application number: 06000439.7
(22) Date of filing: 11.01.2006
(51) Int. Cl.: G01F 1/58

(54) **Electrode in a measurement tube of a magnetic-inductive flowmeter**

(30) Priority: 21.01.2005 DE 102005002904
(71) Applicant: ABB PATENT GmbH, 68526 Ladenburg (DE)
(72) Inventor: Schwiderski, Hans-Werner, Dipl.-Ing., 27176 Nörten-Hardenberg (DE); Kesse, Dieter, 37194 Wahlsburg (DE)
(74) Representative: Miller, Toivo

(57) **Abstract**

Electrode in an internally lined measurement tube of a magnetic-inductive flowmeter, having an electrically conductive mount which can be loaded mechanically, characterized in that the mount is provided at least on its side facing the measurement tube interior with a multilayer film, comprising at least one first electrically conductive thin film, as well as a second electrically conductive thin film, which covers the first thin film and has good resistance to abrasion and corrosion.

## Description

The invention relates to an electrode in an internally lined measurement tube of a magnetic-inductive flowmeter, having an electrically conductive mount which can be loaded mechanically, according to the precharacterizing clause of Claim 1.

The basic design and method of operation of magnetic-inductive meters are described, for example, in the German-Language Dictionary of Measurement and Automation, published by Elmar Schrüfer, VDI-Verlag, Düsseldorf 1992, pages 262-263. By virtue of the principle of operation, magnetic-inductive meters can be used only for measurement of the flow of electrically conductive fluid substances. Magnetic-inductive flowmeters can be operated with a conductive signal tap. They then have at least one pair of signal sensing electrodes, which are installed in the internal lining of the measurement tube wall and make contact on the inside of the measurement tube with the fluid flowing through the tube.

Metal electrodes are generally used as signal sensing electrodes in the prior art. DE 4105311C2 describes electrodes of this generic type which have an electrode mount which can be highly loaded mechanically and is provided at least on its side facing the interior of the measurement tube with a film composed of an electrode material that is highly resistant to corrosion and abrasion, with the film being formed from a silicate, a carbide, a borate or a nitride. The film is applied by spraying or soldering, with the film then being relatively thick and with a large amount of material being consumed for its production, or it is produced by borating, nitriding or carbonization of the electrode surface, which is likewise highly complex.

For many applications, for example in the foodstuffs industry, it is also necessary to use a noble and thus expensive material as the electrode material, for reasons of hygiene, cleaning capability, chemical resistance and durability.

The object of the present invention is thus to provide an electrode in an internally lined measurement tube of a magnetic-inductive flowmeter, which can be produced easily and at low cost, while at the same time having a long life.

The object is achieved by an electrode of this generic type having the characterizing features of Claim 1.

Thus, according to the invention, the mount is provided at least on its side facing the measurement tube interior with a multilayer film, comprising at least one first electrically conductive thin film composed of an element of the first or the eighth group in the fourth, fifth or sixth period of the periodic table of the elements, as well as a second electrically conductive thin film, which covers the first film and has good resistance to abrasion and corrosion.

In this case, the expression a thin film means an amorphous, polycrystalline or monocrystalline film of a solid substance, whose thickness is in the order of magnitude of 1 nanometer to a few micrometers, based on the definition in the German-Language Technical Dictionary "Der Brockhaus Naturwissenschaft und Technik, Band 1 A-Gd, Spektrum Akademischer Verlag GmbH, Heidelberg, 2003", [Brockhaus - Science and Engineering, Volume 1 A-Gd] under the keyword "thin films".

The elements in the first or eighth group in the fourth, fifth or sixth period of the periodic table of the elements, as used for the first film according to the invention, include elements which are suitable for electrodes in magnetic-inductive flowmeters for widely differing applications, in particular including critical applications such as the foodstuffs industry. These are the elements Fe, Co, Ni, Ru, Rh, Pd, Ir, Pt, Au; Cu, Ag, Au. In one particularly advantageous embodiment of the invention, the first film is in this case composed of gold or platinum.

The advantage of the use of a thin film composed of one of the stated materials as the first film of the electrode according to the invention is the saving of expensive materials, and thus low productions costs. The second thin film, which covers the first film according to the invention, ensures that the first thin film is protected against abrasive and corrosive wear during practical operation of the magnetic-inductive flowmeter, so that a long life can be achieved in operation despite the film being only very thin.

In one highly advantageous embodiment, the second film is composed of a thin film of an electrically conductive ceramic, for example composed of AlTiN or TiN. Thin films composed of these materials are particularly resistant to mechanical abrasion and chemical corrosion, can be produced easily using known coating methods, and adhere well to thin first layers composed of the stated materials.

The material of the first thin film can be applied to the mount epitaxially or by vapour deposition, sputtering or laser ablation, electrochemical deposition or chemical vapour deposition (CVD).

The material of the second thin film can be applied to the first thin film by vapour deposition, sputtering, electrochemical deposition or by chemical vapour deposition (CVD).

In one advantageous embodiment, the mount may itself be composed of stainless steel, which is a widely used cost-effective material with high mechanical stability.

In one advantageous embodiment of the invention, the electrode is fitted in a hermetically sealed form into the internal lining of the measurement tube. This creates a measurement tube with an electrode according to the invention in particular for applications in the foodstuffs industry, or in pharmacy, which can be cleaned by means of normal chemical and/or biological cleaning methods, in particular also including so-called "Clean in Place" or CIP methods without removal of the measurement tube during the cleaning process.

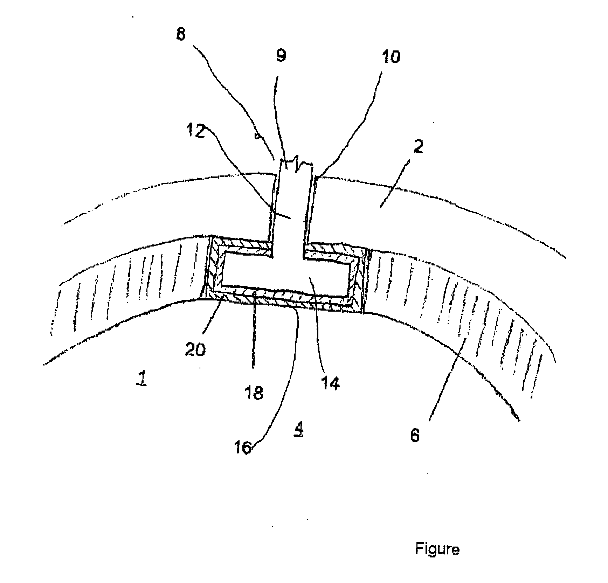

The invention as well as further advantageous refinements and improvements of the invention will be explained and described in more detail with reference to the drawing, which illustrates one exemplary embodiment of the invention.

The single figure shows a schematic cross section of a part of a measurement tube 1 of a magnetic-inductive flowmeter for measurement of the flow of electrically conductive fluid substances, for example water. The tube wall 2 of the measurement tube 1 is composed of metal, as is normal for magnetic-inductive flowmeters. It is lined with a tube internal lining 6 towards the internal area 4 through which the fluid flows. The lining 6 on the inside of the tube is composed of an electrically insulating, chemically highly resistant plastic material, for example Teflon. The relationships between the dimensions of the measurement tube wall 2, the lining 6 on the inside of the tube and the electrode 8 in the figure are not to scale, but are illustrated only schematically.

The part of the measurement tube illustrated in the figure has an opening 10 in the measurement tube, in which an electrode 8 is held. The electrode 8 comprises a mount 9 composed of stainless steel, with a T-shaped form. The longitudinal mount bar 12 is guided in an electrically insulated manner in the opening 10, although the isolation layer is not shown here. The transverse mount bar 14 is held in a corresponding recess in the lining 6 on the inside of the tube, in such a way that that surface 16 of the electrode 8 which points towards the inside of the measurement tube ends flush and hermetically sealed with the inner face of the lining 6 on the inside of the tube.

The transverse mount bar 14 for the electrode 8 is provided with a two-layer film composed of two thin films. First of all, a thin film 18 composed of platinum is applied to the transverse mount bar 14 as the first film, over which a second thin film 20 composed of TiN is then applied. Both films are electrically conductive.

By way of example, the vapour deposition process is used for production of the first thin film 18 composed of platinum. The first film 18 is a thin film with a film thickness between a few nanometers and a few micrometers. The production of thin platinum films such as these on stainless steel mounts is known from the prior art. It is also used for large-scale production, using so-called batch methods, by way of example for the production of platinum films on silicon chips for semiconductor purposes. As an alternative to vapour deposition, the platinum film can also be deposited by sputtering, by laser ablation, or by chemical vapour deposition (so-called CVD process), epitaxially or by electrochemical deposition.

The second film 20 composed of TiN is likewise a thin film and is produced by sputtering, although it could also be produced by later ablation or by chemical vapour deposition (so-called CVD processes). The application of TiN films is also known from the prior art, for example for semiconductor purposes, where it is also used for large-scale production. The coating method can thus be carried out highly cost-effectively. The TiN film 20 is used as a protective layer against corrosion and abrasion for the first measurement electrode film 18.

The two-layer system shown in the figure, comprising the platinum film 18 and the TiN film 20, allows the electrode 8 to be used even in critical applications, in particular in the foodstuffs industry or in the pharmaceutical industry where the inner surfaces of the magnetic-inductive meters which touch the substance being measured are subjected to particularly stringent requirements, especially with regard to hygiene and cleaning capability. The fitting and installation of the electrode 8 according to the invention and its installation in the tube wall 2 of the magnetic-inductive meter, as illustrated in the figure, allow the magnetic-inductive meter to be cleaned without removing it from the process pipeline, using a so-called CIP (Cleaning in Place) process. In this case, as is known, a generally highly alkaline, hot cleaning solution is passed through the process pipeline system, including all of the fittings and meters installed there which carry the measurement substance, instead of the measurement fluid at particularly regularly recurring intervals, thus removing organic and inorganic contamination. The inner surfaces of the process pipeline system which touch the measurement substance can then also be subjected to hot-steam sterilization. All of these cleaning and disinfection steps result in very stringent requirements for the corrosion and abrasion resistance of the measurement electrodes, and these requirements can be satisfied by a two-layer structure according to the invention.

The embodiment shown in the figure is, of course, not the only possible embodiment for electrodes according to the invention. All other types of electrode mounts and their installation in magnetic-inductive meters are also covered by the invention, provided only that these electrodes are provided with a multilayer structure according to the invention on their side facing the measurement tube interior.

## Claims

1. Electrode (8) in an internally lined measurement tube (1) of a magnetic-inductive flowmeter, having an electrically conductive mount (9) which can be loaded mechanically, **characterized in that** the mount (9) is provided at least on its side facing the measurement tube interior (4) with a multilayer film, comprising at least one first electrically conductive thin film (18) composed of an element of the first or the eighth group in the fourth, fifth or sixth period of the periodic table of the elements, as well as a second electrically conductive thin film (20), which covers the first thin film (18) and has good resistance to abrasion and corrosion.

2. Electrode (8) according to Claim 1 **characterized by** a first thin film (18) composed of platinum or gold.

3. Electrode (8) according to one of the preceding claims, **characterized by** a second thin film (20) composed of an electrically conductive ceramic.

4. Electrode according to one of the preceding claims, **characterized by** a second thin film (20) composed of aluminium titanium nitride (AITiN) or titanium nitride (TiN).

5. Electrode according to one of the preceding claims, **characterized in that** the material of the first thin film (18) is applied to the mount (9) by vapour deposition, sputtering, laser ablation, electrochemical deposition, chemical vapour deposition (CVD) or epitaxially.

6. Electrode according to one of the preceding claims, **characterized in that** the material of the second thin film (20) is applied to the first thin film (18) by vapour deposition, sputtering, electrochemical deposition or by chemical vapour deposition (CVD).

7. Electrode according to one of the preceding claims, **characterized by** a mount (9) composed of stainless steel.

8. Electrode according to one of the preceding claims, which is fitted in a hermetically sealed form into the internal lining of the measurement tube.
